(19)

Europäisches Patentamt
European Patent Office
Office européen des brevets

(11) **EP 2 988 246 A1**

(12) **EUROPEAN PATENT APPLICATION**

(43) Date of publication:
24.02.2016 Bulletin 2016/08

(51) Int Cl.:
*G06K 1/12* (2006.01)

(21) Application number: 15186161.4

(22) Date of filing: 18.04.2001

(84) Designated Contracting States:
DE FR GB IT

(30) Priority: 18.04.2000 US 197518 P
02.11.2000 US 705007
02.11.2000 US 704653
02.11.2000 US 705206

(62) Document number(s) of the earlier application(s) in accordance with Art. 76 EPC:
01929068.3 / 1 275 077

(71) Applicant: **MARKEM TAG, INC.**
**Keene NH 03431 (US)**

(72) Inventors:
• **ASSA, Shlomo**
**Carlsbad, CA 92009 (US)**

• **RIDEOUT, Jeffrey, Allen**
**Santee, CA 92071 (US)**
• **MEYER, Steven, Jerome**
**San Diego, CA 92127 (US)**

(74) Representative: **Peterreins Schley**
**Patent- und Rechtsanwälte**
**Soeltlstraße 2a**
**81545 München (DE)**

<u>Remarks:</u>
This application was filed on 22-09-2015 as a divisional application to the application mentioned under INID code 62.

(54) **PRINTING A CODE ON A PRODUCT**

(57)     Methods for printing and printing systems are disclosed. The method includes providing a printing system having a laser source for producing a printing beam and directing the beam to a plurality of locations on a material, and/or adjusting a dwell time of the printing beam at the one or more locations so as to form a spot at each location. The method may include providing a printing system for printing a code on a product moving in a direction, and/or printing the code according to a corrected data set. The system includes a laser configured to produce a printing beam, the laser being at most a 25 Watt laser and a housing including a printing beam exit member through which the printing beam exits the housing. The system also includes within the housing an optics assembly that focuses the printing beam on a product that is adjacent to the housing.

Figure 1A

**Description**

**RELATED APPLICATIONS**

This application claims priority to U.S. Provisional Application No. 60/197,518, filed on April 18, 2000 and entitled "Printing A Code On A Product"; and U.S. Non-provisional Application Nos. 09/704,653, 09/705,007, and 09/705,206, all filed on November 2, 2000, and all entitled "Printing A Code On A Product". The provisional application and the three non-provisional applications are incorporated herein in their entirety.

**BACKGROUND**

1. Field of the Invention

The invention relates generally to a printing system. In particular, the invention relates to a printing system having a laser for printing on a product positioned adjacent to the printing system.

2. Background of the Invention

Modem production practices often require that a code be printed on a commercially available product. These codes are easily observed on common products such as soda cans, cosmetics pet food container etc. Additionally, government regulatory agencies, such as the Food and Drug Administration may require certain products to have these codes.

These codes often include information which is unique to the time and place that the product is manufactured. For instance, many code communicate a batch number associated with a product. Many codes go further and indicate the actual time and date of manufacture. Since these codes are unique to the actual manufacturing parameters, the code can not be pre-printed on the label for the product. Hence, the code must often be printed on the label after the product is manufactured.

Current code printing technology employs ink jets which spray ink onto the label. In order to prevent difficulties associated with having a wet code printed on the label, these ink jets often use quick drying ink which is known to dry in the nozzle. As a result, these ink jets can cause considerable down time. Further, the manufacturer must continue to buy the ink long after purchasing the ink jet. As a result, the ink jet becomes an ongoing manufacturing expense. Additionally, the toxicity of some ink adds additional manufacturing complexity. For the above reasons there is a desire to replace code printing ink jets with an improved technology.

**SUMMARY OF THE INVENTION**

The invention relates to a method for printing on a material. The method includes providing a printing system having a laser source for producing a printing beam and directing the printing beam to a plurality of locations on a material. The method also includes adjusting a dwell time of the printing beam at the one or more location so as to form a spot at each location.

Another embodiment of the method includes providing a printing system for printing a code on a product which is adjacent to the printing system and which is moving in a direction relative to the printing system. The code is constructed from a plurality of pixels. The method also includes prioritizing the order in which the pixels are printed such that the pixels are printed in a direction which is opposite to the direction which the product moves.

Another embodiment of the method includes providing a printing system for printing a code on a product moving in a direction. The code is constructed from a plurality of pixels in a first data set indicating the positions of the pixels. The method also includes generating a corrected data set indicating the position that each pixel would occupy if each pixel were moved at the velocity of the product until the pixel was printed. The method further includes printing the code according to the corrected data set.

Yet another embodiment of the method includes providing a printing system having a laser source for producing a printing beam and directing the printing beam so as to form a code on the material. The method also includes changing the amount of time required to form the code on the product.

Still another embodiment of the method includes providing a printing system for printing an alphanumeric code on a product moving in a direction, the code being constructed from a plurality of pixels. The method also includes printing pixels on the product in a two dimensional trace so as to form the code on the product.

The invention also relates to a printing system. The printing system includes a laser source for producing a printing beam and electronics for directing the printing beam to a plurality of locations on a material. The printing system also includes electronics for adjusting a dwell time of the printing beam at the one or more location so as to form a spot at each location.

Another embodiment of the system includes a laser configured to produce a printing beam for printing a code on a product. The laser is at most a 25 Watt laser. A housing includes a printing beam exit member through which the printing beam exits the housing. An optics assembly is positioned within the housing. The optics assembly focussing the printing beam on a product which is adjacent to the housing.

A further embodiment of the system includes a laser for printing a code on a product moving in a direction. The code is constructed from a plurality of pixels in a first data set which indicates the positions of the pixels. The system also includes electronics for generating a corrected data set which indicates the position that each pixel would occupy if each pixel were moved at the velocity of the product until the pixel was printed. The system also includes electronics for printing the code according to the corrected data set.

Yet another embodiment of the system includes a laser for printing a code on a product which is adjacent to the printing system and moving in a direction relative to the printing system. The code is constructed from a plurality of pixels. The system also includes electronics for prioritizing the order in which the pixels are printed such that the pixels are printed in a direction which is opposite to the direction which the product moves.

Another embodiment of the system includes a laser source for producing a printing beam and electronics for directing the printing beam so as to form a code on the material. The system also includes electronics for changing the amount of time required to form the code on the product.

Still another embodiment of the system includes a laser for printing an alphanumeric code on a product that is adjacent to the printing system and moving in a direction relative to the printing system. The code is constructed from a plurality of pixels. The system also includes electronics for printing pixels on the product so as to form the code on the product, the pixels being printed in a two dimensional trace.

## BRIEF DESCRIPTION OF THE DRAWINGS

Figure 1A is a sideview of a printing system according to the present invention.

Figure 1B is a cross section of the printing system looking down on to the printing system.

Figure 2 illustrates the printing system forming a print zone upon a product.

Figure 3A is a sideview of a printing system used in conjunction with a product line which temporarily stops the product in front of the printing system.

Figure 3B is a sideview of a printing system used in conjunction with a product line which continuously moves the product in front of the printing system.

Figure 3C is a topview of a printing system used in conjunction with a product line which continuously moves the product in front of the printing system.

Figure 4A illustrates an optical assembly for use in a printing apparatus according to the present invention.

Figure 4B is a sideview of a plurality of mirrors configured to steer a printing beam produced by the printing system from one location to another on a product where a code is to be formed.

Figure 4C illustrates the relationship between the optics assembly and the housing.

Figure 4D illustrates the non-linear nature of a lens used in the optics assembly.

Figure 4E illustrates a bearing which allows a printing beam exit member of the printing system to be rotated relative to a housing of the printing system. The rotatability of the printing beam exit member relative to the housing allowing a printing beam transmitted through the printing beam exit member to be aimed at a desired position on a product.

Figure 5A is a sideview of a printing beam being incident on a material at a location where a spot is to be formed on the material.

Figure 5B is a perspective view of a printing beam being incident on a material at a location where a spot is to be formed on the material.

Figure 5C is a sideview of a material after the printing beam has formed a spot in the material.

Figure 5D is a perspective view of a material after the printing beam has formed a spot in the material.

Figures 6A-6D illustrate formation of pixels having different sizes.

Figure 7A illustrates an array of possible pixels which are selected to form a symbol within the array.

Figure 7B illustrates the symbol of Figure 7A printed on a product.

Figure 8A illustrates an aperture through which limits the area within which the printing system is able to print.

Figure 8B illustrates a symbol to be printed on a product continuously moving in front of the printing system. The symbol includes a plurality of pixels arranged in columns. The order that the columns are printed is prioritized in a direction opposite of the direction which the product moves.

Figure 8C illustrates a symbol to be printed on a product continuously moving in front of the printing system. The symbol includes a plurality of pixels. The order that each pixel is printed is prioritized.

Figure 9A illustrates conversion of a code to a corrected code. The correct code is an image of the code which illustrates where the pixels of the code should be printed on a moving product in order for the code to appear as the uncorrected code.

Figure 9B illustrates the code being converted to a corrected code.

Figure 9C illustrates the corrected code.

Figure 9D illustrates the code formed on the product after the corrected code is printed on the product while the product is continuously moved past the printing system.

Figure 10A illustrates conversion of a pixel to a corrected pixel. The correct pixel being an image of the pixel which illustrates where the spots of the pixel should be printed on a moving product in order for the pixel to appears as the uncorrected pixel.

Figure 10B illustrates the corrected pixel.

Figure 10C illustrates the pixel formed on the product after the corrected pixel is printed on the product while the product is continuously moved past the printing system.

Figure 10D illustrates a spot formed on a stationary product.

Figure 10E illustrates the spot of Figure 10D formed on a product as the product is moving.

Figure 11A illustrates the relationship between the product, the print trigger, the printing system and the print area.

Figure 11B illustrates the leading edge of a print area.

## DETAILED DESCRIPTION OF THE PREFERRED EMBODIMENT

The invention relates to a printing system for printing a code on a product positioned adjacent to the printing system. The printing system includes a laser for producing a printing beam and an optics assembly for steering the printing beam from one location to another location on the product. The printing system includes electronics for adjusting the time that the printing beam dwells at each location. This dwell time is adjusted such that the printing beam causes a spot to be formed at each location.

The locations can be arranged such that the spots form a pixel on the product. The pixels in turn can be arranged to form the symbols of a code. The symbols of the code can be the symbols which are available in word processing programs such as alphanumeric symbols and any other symbols used to identify a product batch, date, etc. The code can be readable text such as a product names or identifiers. The code need not be alphanumeric and can include symbols which are not produced by typical word processing programs. For instance, the code can be a bar code.

The products for use with the printing system can be products to be sold retail or packaging of retail products. Further, the products can be products which are sold to other businesses. Examples of products include pharmaceuticals, pharmaceutical packaging, food packaging, cosmetics, food such as eggs, dairy products, ice cream, computer components, automotive components, medical devices, detergents and beverages such as soft drinks and wines.

The code can be formed in multiple locations on a product. For instance, plastic medicine bottles can have one code printed directly on the plastic bottle and another code formed on the label attached to the plastic bottle.

As described above, the code is constructed from a plurality of spots. The spot is formed on the product by altering an optical characteristic of the material at the location where the printing beam is incident on the product. The printing beam can alter a variety of optical characteristics of a product. For instance, the printing beam can cause one or more layers of material to be ablated so the underlying layers are visible. Since upper layers of a material often have an ink layer on paper, removal of the ink layer leaves a spot where the paper is visible against the surrounding ink layer. The refractive characteristics of a material can also be altered. For instance, the printing beam can be used to print a code on a plastic such as a soft drink bottle. The printing beam alters the refractive characteristics of the plastic. The code is easily visible since the eye can pick up the sections having contrasting refractive properties. Additionally, the printing beam can etch certain materials.

Since the printing system employs a laser in order to print on the product, there is no need for consumables such as inks and solvents. Accordingly, the printing system can reduce the costs and complexity associated with printing a code on a product.

Traditional printing systems which employ a laser for printing a code on a product typically employ high powered lasers which often require liquid cooling and large amounts of space. However, in a printing system according to the present invention, the time that the laser dwells at each location can be increased to compensate for reductions in the power of the laser. As a result, a low powered laser can be employed in the printing system. For instance, in one embodiment, the laser is a $CO_2$ air cooled laser. In some instances the laser is at most a 25 Watt laser, in other instances the laser is at most a 20 Watt laser, in other instances the laser is at most a 15 Watt laser and in still other instances the laser is at most a 13 Watt laser.

Because the laser can be a low power laser, the laser, optics assembly and associated electronics can be mounted in a housing having a size on the order of an ink jet printer. As a result, the ability to adjust the dwell time means that the printing system according to the present overcomes the size and space challenges associated with traditional printing systems which employ a laser. Hence, the printing system according to the present invention is an ideal substitute for the ink jets used to print codes on products.

The printing system according to the present invention is ideal for printing on products that are moving such as the products in a production line. Because these products are moving relative to the system, there is a limited amount of time available for printing on each product. The printing system according to the present invention includes electronics for varying the amount of time required to print the code on the product. For instance, the printing system according to the present invention includes electronics for changing the density of pixels that define the code. Codes having a reduced pixel density can be printed more quickly than codes with an increased pixel density. Further, the printing system according to the present invention includes electronics for changing the size of the pixels that define the code. Smaller pixels require less printing time. Additionally, the dwell time of the printing system can be changed as noted above. The ability to change the time required to print a code allows the printing system to be used in conjunction with an increased number of production lines.

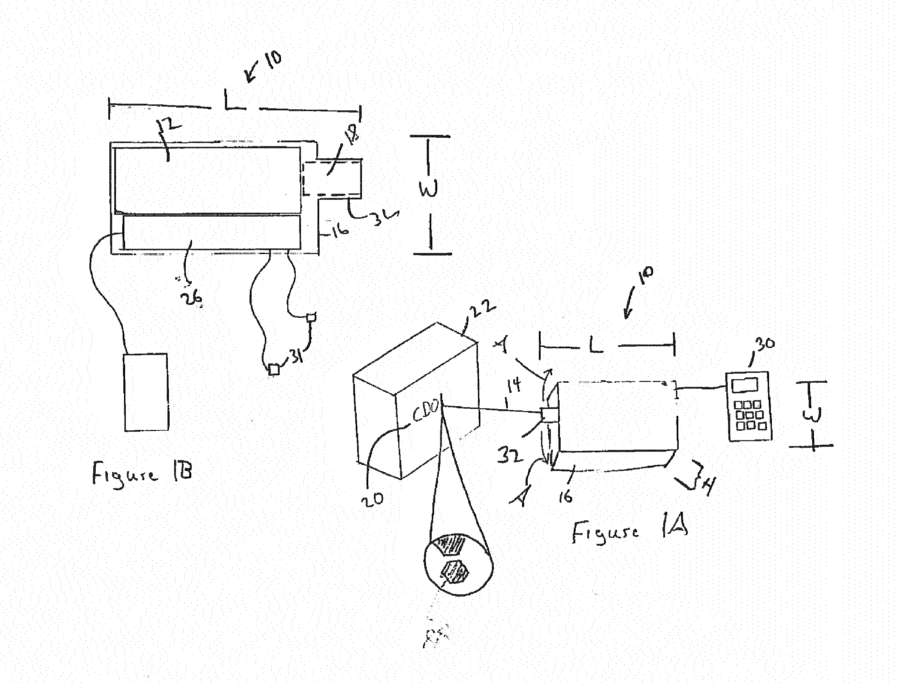

Figures 1A and 1B illustrate a printing system 10 for printing on a product positioned adjacent to the printing system. Figure 1A is a sideview of the printing system 10 while Figure 1B is a cross sectional top view of the apparatus. The printing system 10 includes a laser 12 for producing a printing beam 14. Any laser 12 can be used in the printing system. However, because the dwell time can be increased in order to compensate for the reduced laser power, a low powered laser can be employed in the printing system. For instance, the laser can be a $CO_2$ air cooled laser. In some instances the laser is at most a 25 Watt laser, in other instances the laser is at most a 20 Watt laser, in other instances the laser is at most a 15 Watt laser and in still other instances the laser is at most a 13 Watt laser.

The printing beam 14 from the energy source passes through an optics assembly 18 and is incident on a material 20 such as the material 20 used in product 22 packaging. As will be described in more detail below, the time that the beam is incident on the material 20 can be adjusted such that the beam causes a spot to be formed on the material 20.

The optics assembly 18 includes components for altering the direction of the printing beam 14. These components can be controlled to steer the printing beam 14 from one location to another location so as to create a spot at each of the locations. As will be described in more detail below, the spots can be arranged to form one or more pixels 88 on the material 20. Additionally, these pixels 88 can be arranged to form one or more symbols on the material 20. These symbols can be an alphanumeric code such as the code printed on a product 22 or on the label a product 22.

The printing system 10 also includes electronics 26 in communication with the energy source and the optics assembly 18. The electronics 26 can includes one or more processors for providing the functionality to the printing system 10. Suitable processors include, but are not limited to, microprocessors, digital signal processors (DSP), integrated circuits, application specific integrated circuits (ASICs), logic gate arrays and switching arrays. The electronics 26 can also include one or more memories for storing instructions to be carried out by the one or more processors and/or for storing data developed during operation of the printing system 10. Suitable memories include, but are not limited to, RAM and electronic read-only memories (e.g., ROM, EPROM, or EEPROM).

The electronics 26 control the operation of the laser 12 and the optics assembly 18. For instance, the electronics 26 can control the optics assembly 18 so as to adjust the direction of the printing beam 14, the length of time that the printing beam 14 dwells at a location on the material 20 where a spot is to be formed, the speed that the printing beam 14 moves between each location where the beam dwells, the size of pixels 88 used to create visually recognizable symbols, the selection of symbols created, etc.

The electronics 26 can optionally be in communication with a user interface 30. The user interface 30 can be remote from the housing 16, attached to the housing 16 and/or detachable from the housing 16. A suitable user interface 30 can include an alphanumeric keyboard and a display. The user interface 30 can be used to program the electronics 26 and/or set printing parameters. For instance, the user interface 30 can be used to manually control the time that the printing beam 14 dwells at a single location on the material 20, the size of the pixels 88 used to form a visually observable symbol, the type and/sequence of symbol which are formed, etc. The user interface 30 can also be used to manually activate the printing system 10. For instance, the user interface 30 can include a print key which causes the printing system 10 to print on the material 20.

The electronics 26 can also be in communication with one or more sensors 31. These sensors can provide the electronics with information about the products on which the printing system is to print. For instance, the sensors 31 can indicate the location of a product relative to the printing system, the direction that a product is moving and when a moving product has been stopped and when a product is in the correct position to be printed upon. Suitable sensors 31 include, but are not limited to, a speed sensor for detecting the speed and/or direction that a product is moving, a location sensor for indicating when a product is positioned in front of the sensor 31.

The printing system 10 includes a printing beam exit member 32 through which the printing beam 14 exits the housing 16. The printing beam exit member 32 can be as simple as an opening in the housing 16 or an immobile window mounted in the housing 16. In another embodiment, the printing beam exit member 32 can be moved relative to the housing 16 as illustrated by the arrow labeled A. In this embodiment, the printing beam 14 can be manually aimed toward a particular position on the material 20 by manipulating the printing beam exit member 32.

Because the laser can be a low power laser, the housing can also be compact. For instance, the housing can have a volume of less than 1200 cubic inches. In some instances, the housing has a volume less than 900 cubic inches and in other instances, the housing has a volume less than 1200 inches. In one embodiment, the housing has a length, L, less than 25 inches, a width, W, less than 10 inches and a height, H, less than 5 inches. In another embodiment, the housing has a length, L, less than 23.5 inches, a width, W, less than 7.5 inches and a height, H, less than 4 inches. For purposes of these dimensions, the housing includes the print beam exit member.

The small size is also associated with a low weight. For instances, in one embodiment, the housing and the enclosed components weighs less than 30 pounds. In some instances, the housing and the enclosed components weigh less than 25 pounds and in other instances, the housing and the enclosed components weigh less than 22 pounds. This weight does not include the weight of components which are remote from the housing. For instance, this weight does not include user interfaces which are not integral to the housing. Additionally, this weight does not include the weight of any sensors with which the printing system is in communication but which are not integral with the housing.

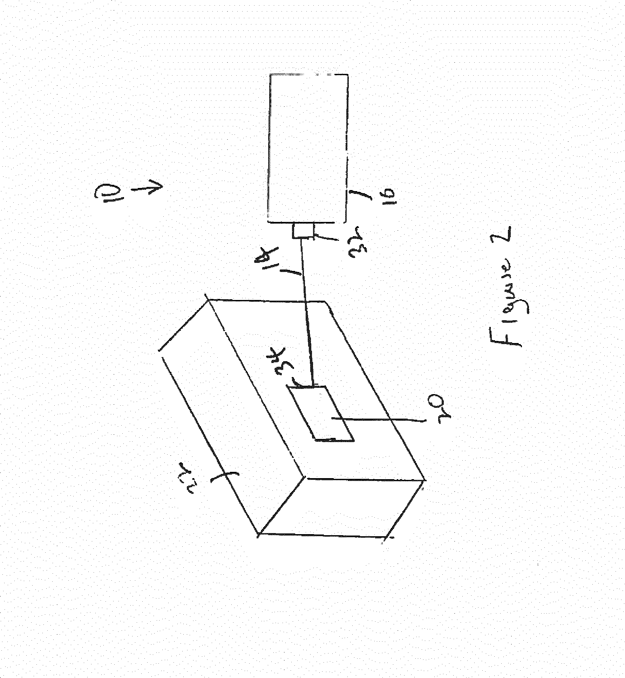

Figure 2 illustrates another embodiment of the printing system 10. The printing system 10 can include components for defining a print zone 34 on the material 20. For instance, the printing system 10 can project a rectangle onto the material 20 as illustrated in Figure 2. The printing system 10 forms the symbol of the code within the print zone 34.

During operation of the printing system 10 the print zone 34 is formed on the material 20 and the operator adjusts the beam outlet member so that the print zone 34 appears at the desired location on the material 20. The user interface 30 is then used to activate print within the print zone 34. As a result, the operator of the printing system 10 can select where the printing mechanism prints on the material 20 by ensuring that the print zone mark appears in the desired print location. Other suitable print zone 34 marks include, but are not limited to, marks at the four corners of a print zone 34, a mark positioned in the center of the print zone 34, and a dashed line around the print zone 34.

In one embodiment of the printing system 10, the electronics 26 control the size and geometry of the print zone 34. As a result, the electronics 26 can match the size and shape of the symbols to be printed on the material 20. For example, when an unusually large code is to be printed on the material 20, the electronics 26 can enlarge the print zone 34 so the code will be formed entirely within the print zone 34. As a result, an increase in the size of the code will not result in erroneous positioning of the code on the material 20.

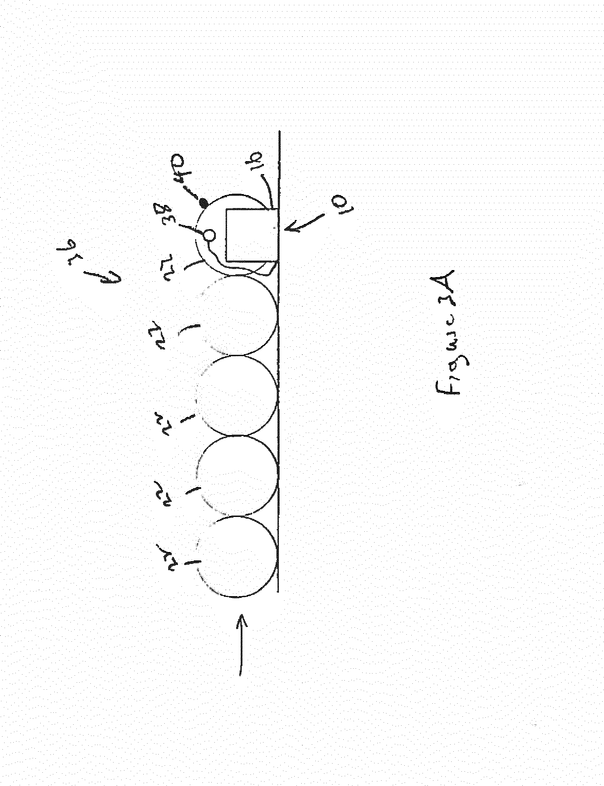

The printing system 10 can print on a stationary product 22, however, the printing system 10 is configured to print on packaging located on a product line 36 which moves the product 22 relative to the printing system 10. Figure 3A illustrates a printing system 10 in operation with a product line 36 which temporarily stops the product 22 in front of the printing system 10. The printing system 10 is in communication with a print trigger 38 which detects when one of the products 22 is positioned in front of the print trigger 38. A suitable print trigger 38 includes a device which produces a light beam. The device can be set up next to the product line 36 so that the product 22 disrupts the beam as the product 22 travels along the product line 36. The printing system 10 can monitor the device to determine when a product 22 has disrupted the beam. The print trigger 38 can be positioned such that when it has been triggered, the product 22 is correctly positioned for printing on the product 22. Alternatively, the print trigger 38 can be positioned such that when it has been triggered, a time delay must pass before the product 22 is correctly positioned for printing upon the product 22.

The printing system 10 is also in communication with a stop mechanism 40 which stops each product 22 in front of the printing system 10. During operation of the product line 36, the stop mechanism 40 is withdrawn to allow the products 22 to move along the product line 36. The movement can be the result of one or more mechanical forces or one or more natural forces such as gravity. Once the product 22 has moved past the stop mechanism 40 the stop mechanism 40 is moved back into place to block the next product 22.

During operation of the printing system 10 illustrated in Figure 3A, the products 22 pass before the printing system 10 on the product line 36. The printing system 10 monitors the print trigger 38 to determine when a product 22 has moved in front of the print trigger 38. The printing system 10 waits a pre-set delay to let the product 22 be pressed against the stop mechanism 40 and then prints the symbols on the packaging. As a result, the product 22 remains stationary while the printing system 10 prints the code on the packaging.

Once the code has been printed, the printing system 10 activates the stop mechanism 40 so the product 22 is again able to move. The printing mechanism monitors the print trigger 38 to find a gap between products 22. Once a gap is found, the printing system 10 activates the stop mechanism 40 to stop the next product 22 and again monitors the print trigger 38 to detect when the next product 22 has moved in front of the print trigger 38.

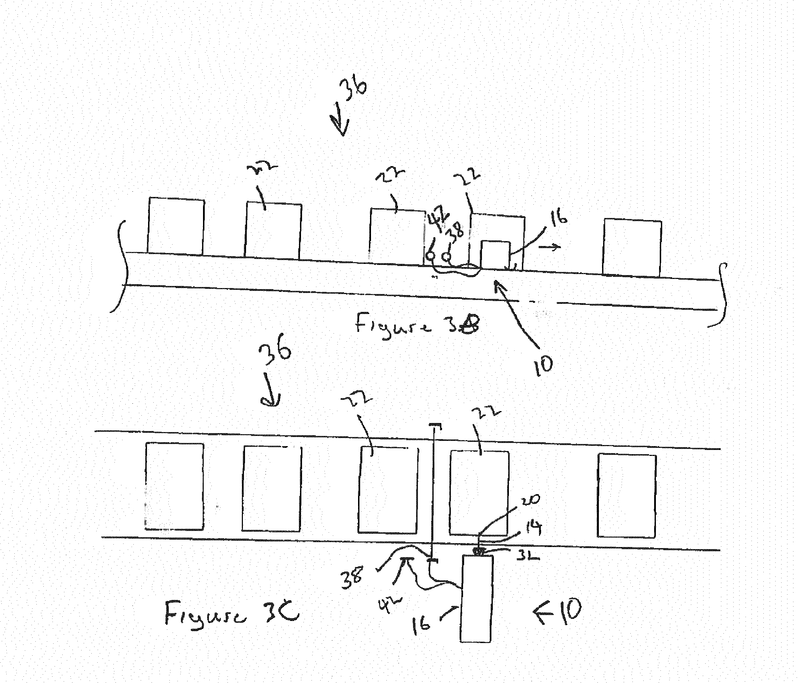

Figures 3B and 3C illustrates the printing system 10 in use with a product line 36 which continuously moves the product 22 past the printing system 10. The products 22 can be evenly or sporadically spaced on the line. The printing system 10 is in communication with a print trigger 38 and a speed sensor 42. The electronics 26 is able to use signals from the speed sensor 42 to determine the speed and direction of the products 22 on the product line 36. Suitable speed sensors include, but are not limited to, encoders and resolvers.

While setting up the printing system 10, the distance between the printing system 10 and the print trigger 38 is administratively entered into the electronics 26. In an alternative embodiment, the print trigger 38 is attached to the housing 16 so as to provide a fixed and known distance between the print trigger 38 and the printing beam 14. In this embodiment, the distance is known to the electronics 26 and does not need to be administratively entered.

During operation of the system, the printing system 10 monitors the print trigger 38 to determine when a product 22 has moved in front of the print trigger 38. When it determines that a product 22 has moved in front of the print trigger 38, the printing system 10 determines the speed of the product 22 on the line and uses this speed to determine a code position time delay. The code position time delay is determined such that the code is printed at a desired position on the product 22. A suitable method for determining this code position time delay is discussed below. Once the determined code position time delay has passed, the symbols are printed as the product 22 moves past the printing system 10.

Once the code is printed, the print trigger 38 is monitored to determine when the product 22 has moved past the print trigger 38. Once the product 22 moves past the print trigger 38, the printing system 10 returns to monitoring the print trigger 38 to identify when a new product 22 has moved in front of the print trigger 38. As is evident from Figure 3B, the print trigger 38 can be triggered by one product 22 while printing on another product 22. Hence, the printing system 10 must track the time delay for one of the products 22 while printing on the other product 22. These situations can be handled with standard multi-task programming.

The printing system 10 can be used with other product lines 36. For instance, some product lines 36 include a labeling station for applying a label to a product 22. The labeling stations typically include electronics 26 for determining when each product 22 has the label applied. The printing system 10 can be in communication with the labeling station and can print the code on each label after it has been applied to the product 22. The printing of the code can be triggered by the electronics 26 within the label station. For instance, when the electronics 26 of the label station detect that a label has been applied, these electronics 26 can provide the printing system 10 with a signal indicating that the code should be printed.

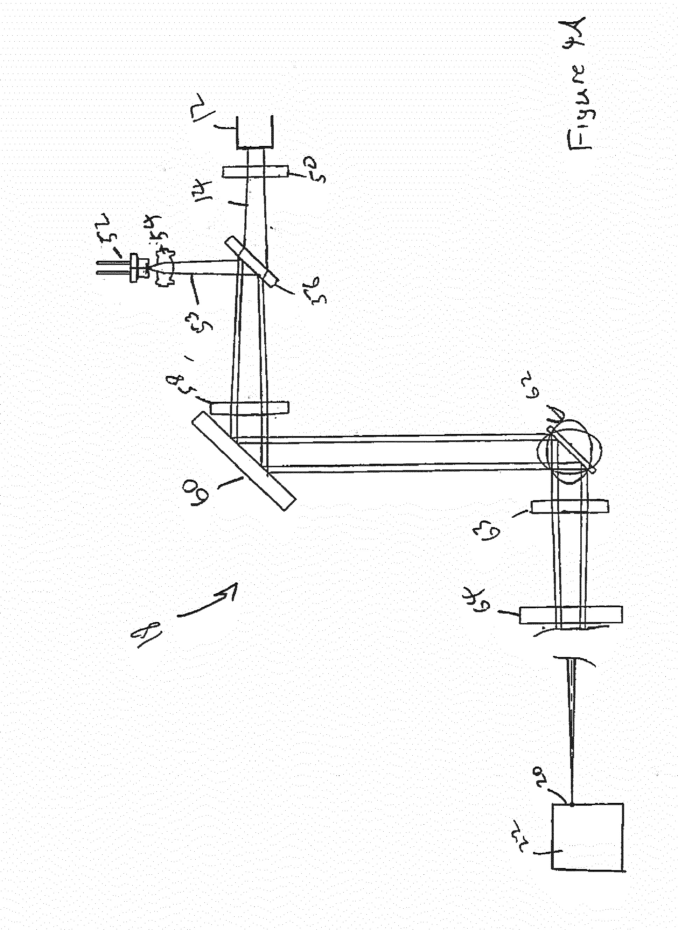

Figure 4A illustrates a topview of an embodiment of the optics assembly 18 for use in the printing system 10. The optics assembly 18 includes the laser 12 source for producing the printing beam 14 which passes through a first negative lens 50 which expands the printing beam 14. The optics assembly 18 also includes a print zone light source 52 for producing a print zone beam 53 which passes through a second negative lens 54 which expands the print zone beam. Although the printing beam 14 and the print zone beam are illustrated as being concurrently produced, the electronics 26 can cause them to be produced independent of one another. Further, the print zone beam is optional and need not be included in the optics assembly 18.

The printing beam 14 and the print zone beam are combined at a beam combiner 56. The combined beams pass through a positive lens 58 which collimates the beams before they are turned at a reflector 60. The combined beams then pass to a plurality of mirrors 62 which reflect the combined beams toward a second positive lens 63 which focuses the combined beams. The combined beams then pass through a protective window 64 before passing to the product 22.

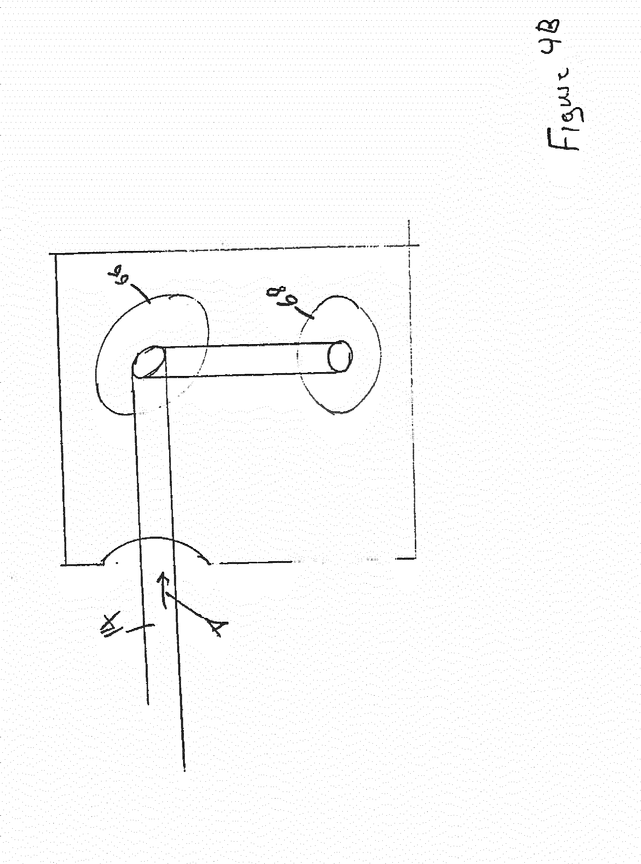

Because Figure 4A is a topview of the optics assembly 18 and the mirrors are positioned on top of one another, the arrangement of the mirrors is not apparent from Figure 4A. In order to clarify the arrangement of the mirrors, Figure 4B provides a sideview of the optics assembly 18 looking through the protective window. The combined beams approach the mirrors from the left as illustrated by the arrow labeled A. The beams are reflected off first mirror 66 down toward second mirror 68. The combined beams are reflected from the second mirror 68 out of the page.

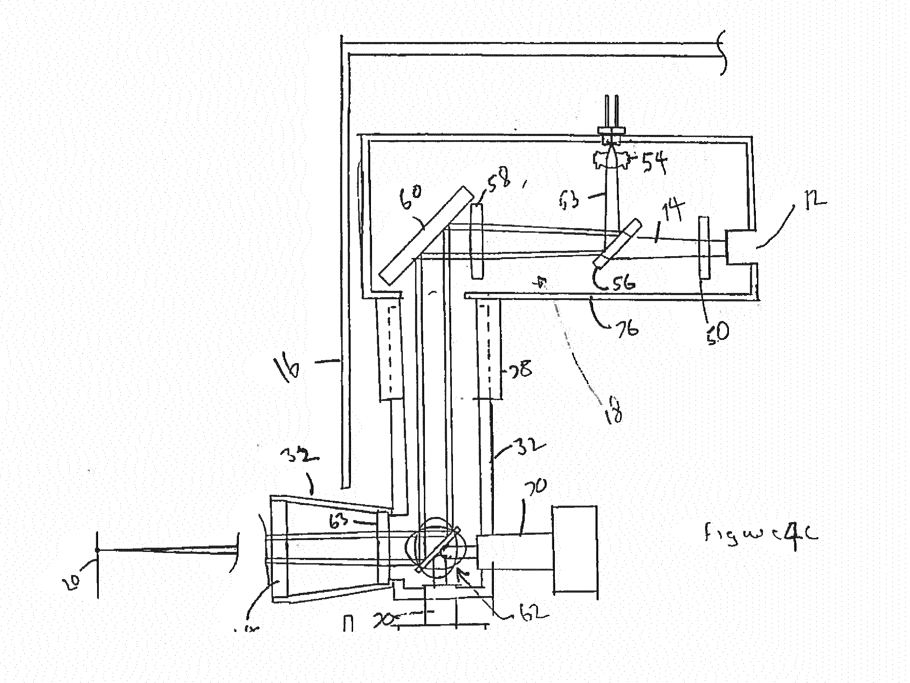

As illustrated in Figure 4C, one or both of the mirrors can be coupled with a one or more actuators 70 for moving the mirrors. Suitable actuators 70 include, but are not limited to, micromotors. The actuators 70 are controlled by the electronics 26 which can use the actuators 70 to steer the print zone beam to form the print zone 34 on the packaging. For instance, when the print zone 34 has a rectangular shape, the print zone beam can trace a rectangle around the print zone 34 at a speed which causes the rectangle to appear solid to the human eye or at about 100 cycles/second. The micrometers can also be used to steer the printing beam 14 to form the symbols on the packaging.

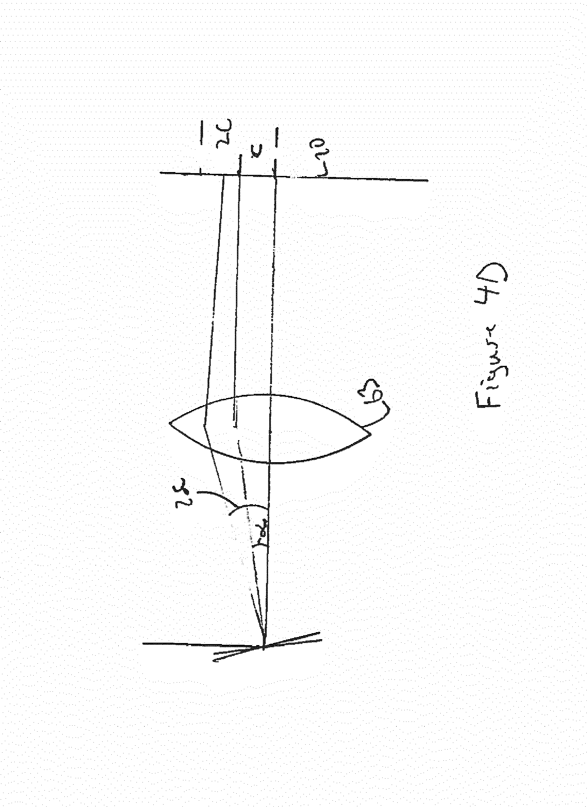

The second positive lens 63 can be a non-linear lens. Figure 4D illustrates the second mirror 68 in a first position and a second position. In the first position, the angle between the printing beam 14 and a lens axis is $\alpha$, while in the second position this angle is doubled to $2\alpha$. Due to the non-linear nature of the lens, the printing beam 14 is incident on the product 22 at a distance, C, from the lens axis when the second mirror 68 in the first position. However, when the second mirror 68 is in the second position, the printing beam 14 is not incident on the product 22 at a distance, 2C, from the lens axis despite the angle being increased to $2\alpha$. The lack of proportionality between the movement of the mirror and the movement of the printing beam 14 results from the non-linear nature of the lens.

The electronics 26 can include logic which corrects for the effects of non-linearity of the second positive lens 63. Accordingly, this logic would cause the second mirror 68 to increase the angle by more than $2\alpha$ in order to move the printing beam 14 by 2C. The correction logic can be developed from theoretical optical equations providing a relationship between $\alpha$ and C for the second positive lens 63. Alternatively, the correction logic can be developed from experiments performed to determine the relationship between $\alpha$ and C. This correction logic eliminates the need for an expensive and large F-$\theta$ lens which is typically used to correct for non-linearity. Accordingly, this correction allows the size and cost of the printing system 10 to be reduced.

The effects of spherical aberration can be corrected with the variable dwell time. For instance, the dwell time is increased when the effects of aberration are apparent on the product 22.

During operation of an optics assembly 18 including a printing zone light source 52, the print zone light source 52 is activated and the laser 14 is deactivated. The mirrors are moved such that the print zone 34 is formed on the product 22. When the symbols are to be formed on the packaging, the print zone light source 52 is disengaged and the energy source engaged until the symbols are formed. Once the symbols are formed, the energy source can be disengaged and the print zone light source 52 engaged in order to continue with formation of the print zone 34.

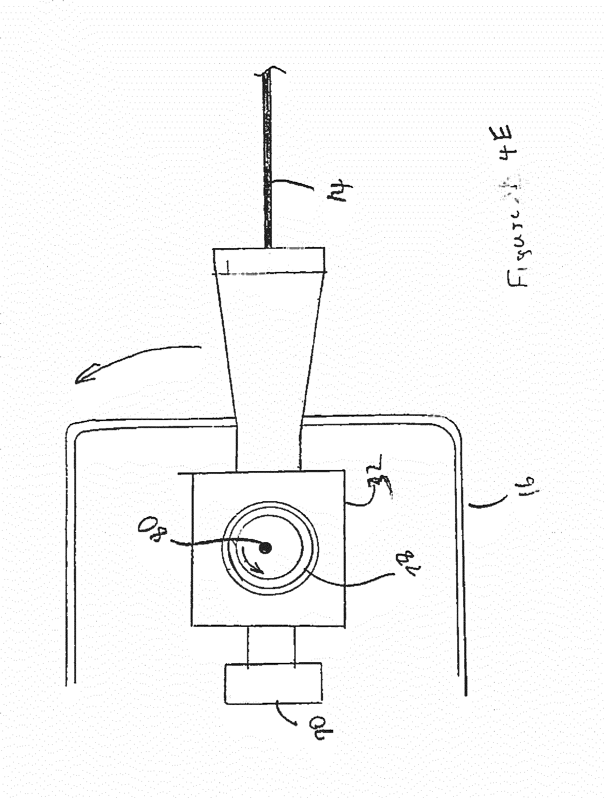

As discussed above, the printing system 10 can include a printing beam exit member 32 which can be moved relative to the apparatus housing 16. Figures 4C and 4E illustrate the mechanical arrangement which permits this movement of the printing beam exit member 32. A frame 76 supports the printing beam exit member 32 within the housing 16. A bearing 78 positioned between the frame 76 and the printing beam exit member 32 allows the printing beam exit member 32 to move relative to the frame 76. Figure 4E provides a sideview of the bearing 78 looking along the printing beam 14. The printing beam 14 passes through the bearing 78 along the axis of rotation 80 permitted by the bearing 78. Hence, movement of the printing beam exit member 32 relative to the frame 76 does not change the position of the printing beam 14 relative to the bearing 78.

As illustrated in Figure 4C and 4E, the first mirror 66, the second mirror 68 and the actuators 70 are coupled with the printing beam exit member 32. As a result, the first mirror 66, the second mirror 68 and the actuators 70 move with the printing beam exit member 32 as the printing beam exit member 32 is moved relative to the housing 16. Further, a portion of the first mirror 66 is positioned along the bearing's axis of rotation 80. Hence, movement of the printing beam exit member 32 does not alter the angle of incidence between the printing beam 14 and the first mirror 66. Accordingly, the first mirror 66 directs the printing beam 14 toward the same portion of the second mirror 68 and the printing beam 14 exits the housing 16 through the same portion of the window when the printing beam exit member 32 is moved relative to the housing 16.

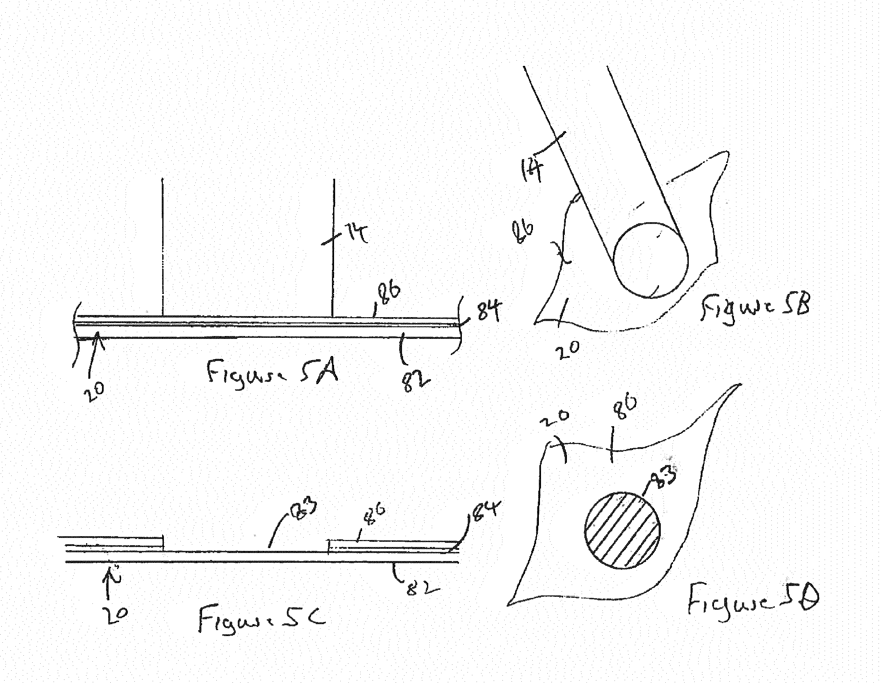

As described above, the printing beam forms a plurality of spots at a variety of locations on the product by remaining at the location until an optical characteristic of the location is altered. For illustrative purposes, Figures 5A-5D illustrate formation of a spot on a product 22 by removing a layer of ink from the product 22. Figures 5A and 5B illustrate the printing beam 14 incident on the material 20 at a particular location before a spot 83 is formed on the material 20. The material 20 includes a substrate 82 such as paper. An ink layer 84 is formed on the substrate. The ink layer 84 can include several different ink types as well as several different colors as is apparent from the labels of many commercially available products 22. The material 20 illustrated in Figure 5A includes an additional layer 86. The additional layer represents the one or more layers which are often present over the ink layer 84 on product 22 packaging. For instance, many materials 20, such as dog food bags, include a wax layer over the substrate 82 and ink layers 84.

Figures 5C-5D illustrate the material 20 after the spot 83 has been formed at the particular location on the material 20. The time that the printing beam 14 dwells at the particular location is adjusted such that the printing beam 14 has ablated the ink layer 84 and the additional layer from the material 20 without burning the substrate. As a result, the substrate 82 is seen at the particular location on the material 20. The time required to ablate an ink layer 84 is typically 100-500 $\mu$s.

The time required to form the spot 83 is often a function of the materials 20 in the layers. For instance, the additional layer can be a wax layer which protects the packaging and gives it an attractive appearance. Forming a spot 83 through such layers often requires more time than is required by the ink layer 84 alone.

The present invention includes adjusting the time that the printing beam dwells at a location such that a spot is formed at the location. In some instances the dwell time is greater than 50 $\mu$s, other instances greater than 100 $\mu$s and other instances greater than 200 $\mu$s. In still other instances dwell time is 50-50,000 $\mu$s, other instances 100-500 $\mu$s and still other instances 200-500 $\mu$s. In some instances, the diameter of the spot is less than 400 $\mu$m, other instances less than 250 $\mu$m and in still other instances less than 170 $\mu$m.

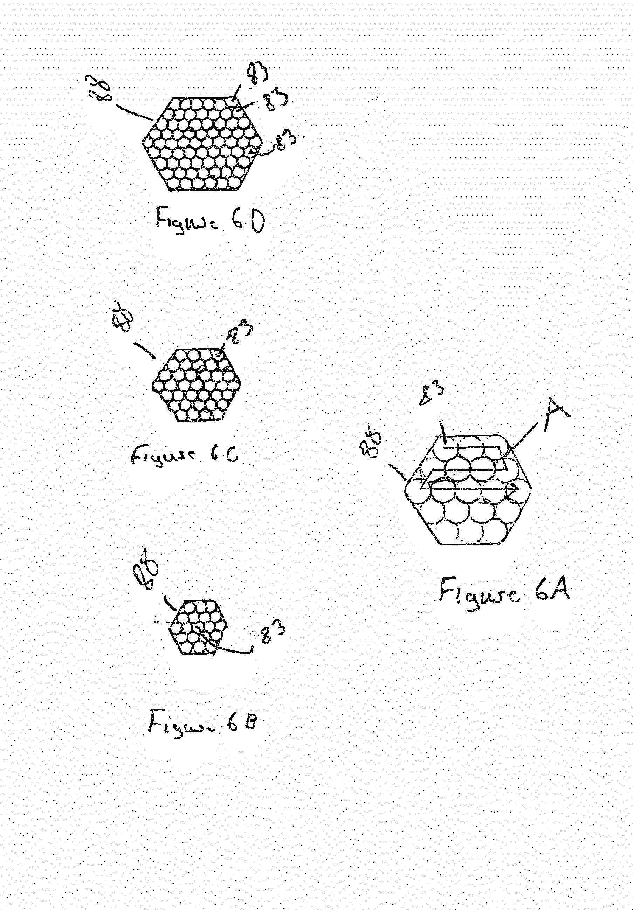

Figure 6A illustrates a plurality of spots 83 arranged on the material 20 so as to define a pixel 88 on the material 20. Moving the printing beam 14 from one location to another location as illustrated by the arrow labeled A creates the pixel 88. A spot 83 is created at each location. The printing beam 14 is preferably incident on the material 20 throughout the formation of the pixel 88. The printing beam 14 is preferably moved from between locations where spots 83 are to be formed at a speed which prevents ablation of any of the layers on the material 20. This is possible due to the relatively low power of the laser 12. As a result, marks are not formed on the material 20 between the spots 83. Alternatively, the printing beam 14 can be moved from one location to another slow enough to provide some ablation between the spots 83. The additional ablation can help create the appearance of continuity between the spots 83.

The size of the pixels 88 formed by the printing system 10 can be selected as illustrated in Figure 6B-6D. Increasing the number of spots 83 used to create the pixel 88 can increase the size of a pixel 88. For a given energy source power and spot 83 size, there is a tradeoff between the time needed to create a pixel 88 and the pixel 88 size. Hence, when an increased printing time is needed, the pixel 88 size can be reduced. Further, the pixels 88 illustrated above have a hexagonal shape, the spots 83 can be arranged in a pixel 88 having a shape other than hexagonal. For instance, the pixels 88 can be square, triangular, circular, etc. In one embodiment, the operator of the printing system 10 can use the user interface to select the size and shape of the pixel 88.

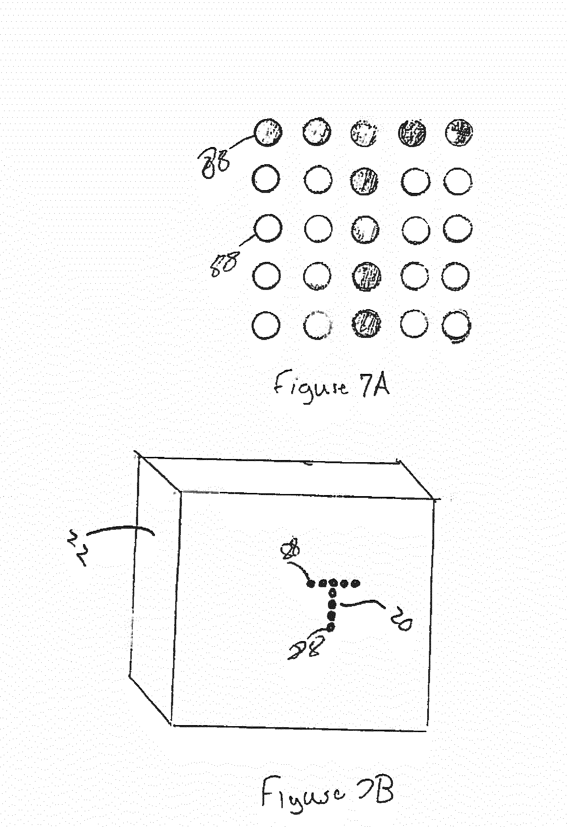

Figure 7A illustrates an array of possible pixels 88 arranged in 5 columns and 5 rows. Symbols can be formed in the array by selecting certain of the possible pixels 88 to become a pixel 88 of a symbol while not selecting other of the pixels 88. For instance, a "T" is formed by selecting the possible pixels 88 which are darkened in Figure 7A. The printing system 10 creates the symbol on the product 22 by directing the printing beam 14 so as to create pixels 88 on the product 22 in the pattern selected from among the possible pixels 88 in the array. Accordingly, the symbol appears on the product 22 as illustrated in Figure 7B. The creation of symbols from a limited number of possible pixels 88 is well known as is illustrated by generation of characters on the LCD display of a calculator or traditional scoreboards.

Although the array of figure 7A is illustrated as having circular pixels 88, the array can include pixels 88 of different shapes such as squares. The distance between the pixels 88 can also be adjusted to increase or decrease the size of the code. In some instances, the distance between the pixels 88 is reduced to the point that the perimeter of one pixel 88 abuts the perimeter of another pixel 88. When the pixel 88 perimeters abut one another and the pixels 88 have a square shape the symbols of the code can have a solid and continuous appearance.

Although the illustrated array is a 5 x 5 array, other array dimensions are possible. For instance, 5 x 5, 7 x 5 and 16 x 10 are preferred array dimensions. Further, the array need not be arranged in rows and columns. Additionally, the possible pixels 88 in an array can overlap. Further some pixels 88 can have a different size than other pixels 88. Additionally, the array size can be changed to meet printing time requirements. For instance, when a code to be printed is so large that the system is not able to print the code on a moving product within the time that the product occupies a position in which the code can be printed, the array size is reduced in order to reduce the number of pixels that must be printed by the system. Because the system has to print fewer pixels, the time needed to print the code is reduced. Accordingly, an embodiment of the invention includes electronics for changing the pixel density in an alphanumeric code to be printed on a moving product.

The electronics 26 can include a database which associates each symbol with a particular pixel 88 pattern. As a result, the operator can enter a symbol or symbol sequence into the user interface 30 and the printing system 10 consults the database to determine the pixel 88 pattern associated with each symbol. The electronics 26 can use the pixel 88 pattern of each symbol to form a first data set which indicates the position of each pixel 88 in a code. For instance, each pixel 88 can be associated with a Cartesian coordinate which indicates where the pixels 88 are to be printed relative to one another. Other coordinate systems and methods can also be used to control the relative positioning of the pixels 88 in a symbol.

Because the laser 12 used is preferably a low power laser, the laser 12 can be moved between pixels 88 without making any marks on the material 20 between the pixels 88. Hence, the laser 12 can also be moved between the symbols without marking portions of material 20 between the symbols. As a result, there is no need to disrupt the printing beam 14 while moving the printing beam 14 between pixels 88 and/or symbols. Typical methods for disrupting the printing beam 14 include turning off the laser 12 or positioning an opaque object in the printing beam 14. The techniques require synchronizing the printing beam 14 disruption with both the motion of the printing beam 14 and any motion of the product 22. A printing system 10 according to the present invention is not associated with these difficulties.

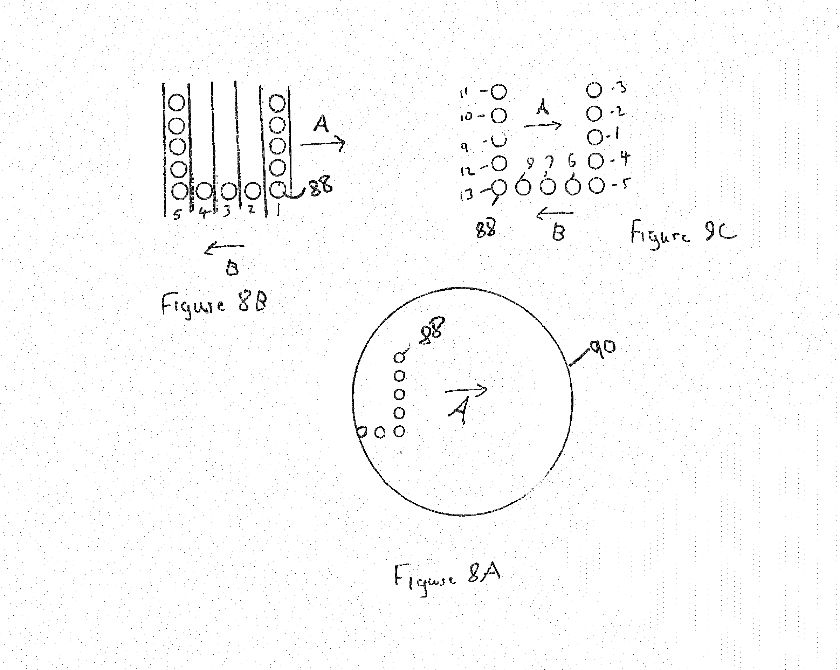

In order to increase printing efficiency when printing on a moving product 22, the printing system 10 can employ a pixel 88 prioritization method. Figure 8A illustrates this area within which the laser 12 can effectively print as an aperture 90. Although this aperture 90 can be a physical window, this aperture 90 is typically a result of the limitations of the optics assembly 18. For instance, the aperture 90 typically defines the area within which the optics assembly 18 will allow the printing system 10 to print without an undesirable loss of print quality. As the product 22 moves past the printing system 10, the printing system 10 prints the code through this aperture 90. The pixel 88 prioritization method according to the present invention increases the effective size of this aperture 90. Hence, the pixel 88 prioritization method allows the product 22 to be moved past the printing system 10 faster than what could be achieved without the pixel 88 prioritization method.

Pixel 88 prioritization determines the order that the pixels 88 will be formed on the product 22. The pixels 88 having higher priorities are printed before pixels 88 having lower priorities. The pixels 88 are prioritized such that the sequence that they are printed causes them to be printed in a direction opposite of the product's direction of motion. For instance, Figure 8B illustrates a U shaped symbol formed in an array of pixels 88 having 5 columns and 5 rows. The U shaped symbol is to be printed on a product 22 moving in the direction of the arrow labeled A. However, the order of pixel 88 formation is prioritized in the direction illustrated by the arrow labeled B. Specifically, the pixels 88 in the column labeled 1 are printed first while the pixels 88 in the column labeled 5 are printed last.

Figure 8A illustrates the U shaped symbol of Figure 8B as it is being printed. Since the pixels 88 are printed in a direction which is opposite to the direction of motion, the portion of the product 22 where the remainder of the symbol is to be printed has not yet entered the aperture 90. As a result, there is still time available for printing the pixels 88 remaining in the symbol. However, if the pixels 88 were prioritized in the opposite direction, the portion of the product 22, the pixels 88 to be printed last might pass out of the aperture 90 before the printing system 10 has the opportunity to print them. Hence, the product 22 would need to be moved more slowly in order to be able to print the symbols. As a result, prioritizing the pixel 88 formation in a direction opposite to the product's direction of motion allows the product 22 to be moved past the printing system 10 at an increased rate of speed.

Figure 8B illustrates the pixels 88 being prioritized by column in that there is no particular print priority assigned to the pixels 88 within a column. However, the pixels 88 can be individually prioritized as shown in Figure 8C. In some instance, the pixels 88 in one more columns are prioritized such that the pixels 88 which would enter the aperture 90 first if they were already present on product 22 are given the highest priority. For instance, if the U shaped symbol of Figure 8C is on a product 22 traveling in the direction illustrated by the arrow labeled A, the pixel 88 labeled 1 will be the first pixel 88 to enter the aperture 90. Accordingly, this pixel 88 is provided the highest print priority in column 1.

Although the above discussion relates primarily to the prioritization of pixels 88, the prioritization can be at the level of the spots 83 which form the pixels 88. For instance, the spots 83 can be given a priority so they are printed in a direction opposite to the product's direction of motion. Additionally, the spots 83 can be prioritized based upon the order that the spots 83 would enter the aperture if the spots 83 were already printed on the product 22.

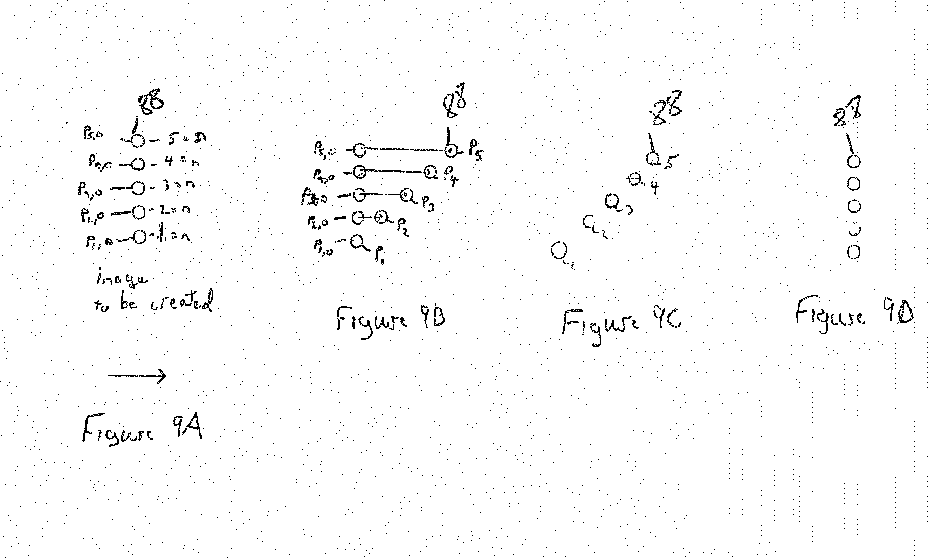

In order to print on a moving product 22, the printing system 10 converts the first data set to a corrected data set. The printing system 10 then prints the code using the corrected data set and treating the product 22 as if it were stationary relative to the printing system 10. Figures 9A-9D illustrates the formation and use of the corrected data set. The corrected data set is generated using the product 22 speed and direction generated using a speed sensor 42 and the average time required to form a pixel 88. The corrected data set is also generated using a pixel 88 printing order. The pixel 88 printing order can be generated according to the pixel 88 priority scheme discussed above or according any other scheme for determination of pixel 88 printing order. The position of each pixel 88 in the corrected data set, $P_n$, is determined by presuming that the pixel 88 in the original symbol moves with the velocity of the product 22 until the pixel 88 is formed as indicated by the vectors illustrated in Figure 9B.

The position of each pixel 88 in the corrected data set, $P_n$, can be expressed in a number of coordinate systems including Cartesian coordinates. $P_n$ can be determined according to equation 1 where n is the

$$P_n = P_{n,o} + (n\text{-}1)(t)\, v \qquad (1)$$

priority assigned to a pixel 88, $P_{n,o}$ is the original position of pixel 88 n, t is the approximate time required to form a pixel 88 and v is the velocity vector constructed from the speed and direction of the product's movement.

An embodiment of the corrected data set is illustrated in Figure 9C. It includes only the corrected pixels 88 illustrated in Figure 9B. The printing system 10 prints the code using the pixel 88 positions specified in the corrected data set as if the product 22 were stationary relative to the printing system 10. Hence, the printing beam 14 is held stationary relative to the printing system 10 as each spot 83 of the pixel 88 is formed. However, the motion of the product 22 causes the code set to visually appear as the original code as shown in Figure 9D. Although the above symbol correction discussion is limited to the formation of a single symbol, each of the symbols in a code is corrected before printing.

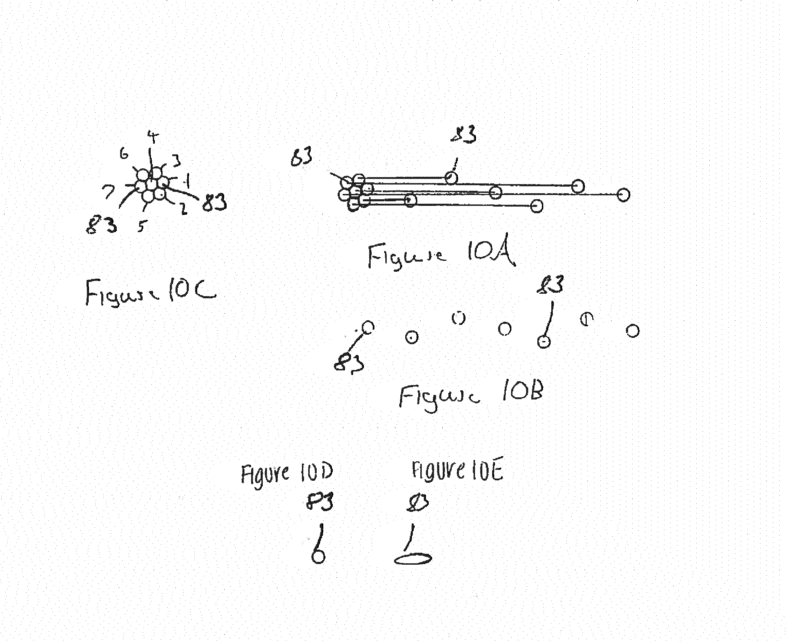

Although the above discussion regarding corrected data sets is limited to the pixel 88 level, in some instances the correction occurs at the spot 83 level. More specifically, corrected positions are determined for each spot 83 making up the pixels 88 of a symbol and the symbols are printed according to the corrected positions of the spots 83 as if the product 22 were stationary relative to the printing system 10. Figures 10A-10C illustrate a method of creating and using a corrected data set at the pixel 88 level. Figures 10A-10C are for a code including a single pixel 88 in order to simplify the illustrative process and the method can be easily extended to include images having multiple pixels 88.

The corrected data set is generated using the velocity of the product 22 generated using a speed sensor 42 and the average time required to form a spot 83 of the pixel 88. The corrected data set is also generated using a spot 83 printing order. The spot 83 printing order can be generated according to the spot 83 priority scheme discussed with respect to the pixel 88 prioritization scheme. However, the spot 83 printing order can also be generated using other schemes for determination of spot 83 printing order. The position of a spot 83 in the corrected data set, $S_m$, is determined by presuming that the spots 83 in the pixel 88 moves at the speed and direction of the product 22 until the spot 83 is formed as indicated by the vectors illustrated in Figure 10A.

The position of each pixel 88 in the corrected data set, $S_m$, can be expressed in a number of coordinate systems including Cartesian coordinates. $S_m$ can be determined according to equation 2 where m is the

$$S_m = S_{m,o} + (m\text{-}1)(t)\, v \qquad (2)$$

print order assigned to a pixel 88, $S_{m,o}$ is the original position of pixel 88 m, t' is the approximate time required to form a spot 83 and v is a velocity vector constructed from the speed and direction of the product's movement.

The corrected data set is illustrated in Figure 10B. It includes only the corrected spots 83 illustrated in Figure 10A. The printing system 10 prints the corrected data set as if the product 22 were stationary relative to the printing system 10. Hence, the printing beam 14 is held stationary relative to the printing system 10 as each spot 83 of the pixel 88 is formed. As a result, a spot 83 which would appear on a stationary product 22 as illustrated in Figure 10D actually is actually "smeared" by the motion of the product 22 as illustrated in Figure 10E. Due to the speed which the spots 83 forming the pixels 88 are generated on the product 22, the smear generally does not affect the appearance of the image. Hence, the motion of the product 22 causes the corrected data set to appear on the product 22 as the pixel 88 illustrated in Figure 10C.

In order for the printing system to print according to the corrected data sets described above, the system must be able to print a two dimensional trace 91 of spots 83. Previous laser based systems for printing on a product have been limited to printing traces of spots or traces of pixels in a single dimension. Accordingly, an embodiment of the invention relates to forming a two dimensional trace 91 of spots or a two dimensional trace of pixels.

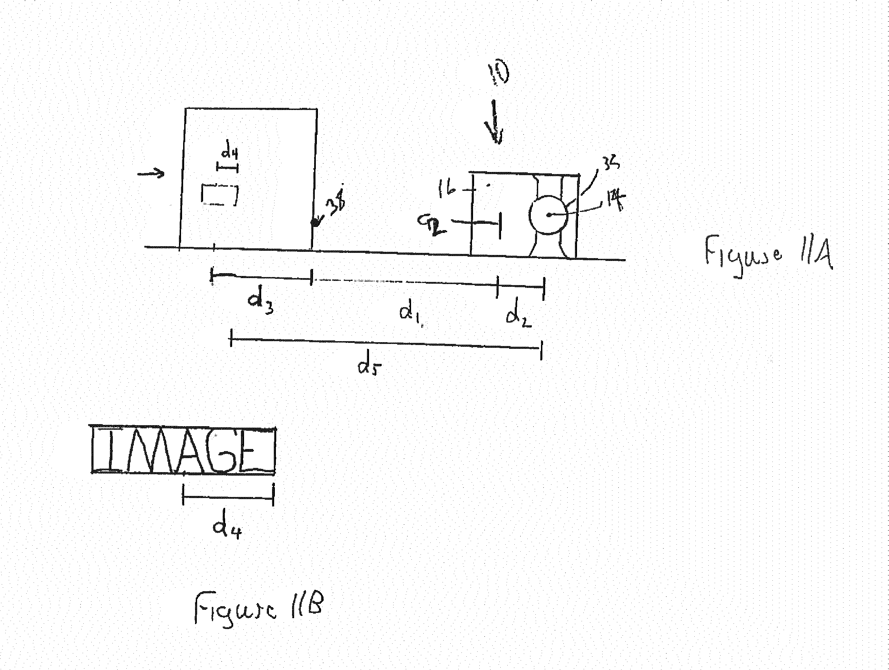

In order for the printing system 10 to print the code at a specific position on the product 22 the printing system 10 must determine a code position delay. Figures 11A and 11B illustrate the relationship between the product 22, the print trigger 38 and the printing system 10. As described above, the distance between the print trigger 38 and the printing system 10 is entered during the set up of the printing system 10. This distance is illustrated as distance $d_1$ in Figure 11A. This distance is measured relative to some a constant measuring point 92 such as a mark on the housing 16. Although the measuring point 92 is illustrated as a mark on the housing 16, the measuring point 92 can also be a physical characteristic of the printing system 10. For instance, the measuring point 92 can be one side of the housing 16.

The printing system 10 knows the distance between the measuring point 92 and the edge of the aperture which is closest to the print trigger 38. This distance is illustrated as distance $d_2$ in Figure 11A. When a product 22 trips the print trigger 38 the distance between the edge of the aperture and the leading edge of the product 22 is $d_1 + d_2$.

The operator of the printing system 10 administratively uses the user interface 30 to enter into the printing system 10 the distance from the front edge of the product 22 where he would like the center of the code to appear on the product 22. This distance is illustrated as $d_3$. The printing system 10 determines the length of the code from the pixel 88 positions specified in the first data set and divides this length in half. This distance is illustrated as $d_4$ in Figure 11A. The printing system 10 determines the distance between the edge of the aperture and the leading edge of the print area, $d_5$, according to Equation 3.

$$d_5 = d_1 + d_2 + d_3 - d_4 \qquad (3)$$

During operation of the printing system 10, the printing system 10 divides $d_5$ by the speed of the product 22 to determine the code position time delay. When the print trigger 38 indicates that the leading edge of the product 22 has reached the print trigger 38, the printing system 10 waits for the code position time delay to pass before beginning to print the code.

Although the present invention has been described in detail, it should be understood that various changes, combinations, substitutions and alterations can be made hereto without departing from the spirit and scope of the invention as described by the appended claims.

EMBODIMENTS

Although the present invention is defined in the attached claims, it should be understood that the present invention can also (alternatively) be defined in accordance with the following embodiments:

1. A method for printing on a material, comprising:

providing a printing system having a laser source for producing a printing beam;
directing the printing beam to a plurality of locations on a material; and
adjusting a dwell time of the printing beam at the one or more locations so as to form a spot at each location.

2. The method of embodiment 1, wherein directing the printing beam to a plurality of locations includes steering the printing beam to a plurality of locations.

3. The method of embodiment 1, wherein the printing beam is incident upon the material as the printing beam is moved from one of the locations to another location, the printing beam being moved at a speed which prevents the beam from marking the material between the locations.

4. The method of embodiment 1, wherein the plurality of spots are arranged so as to define one or more pixels on the material.

5. The method of embodiment 4, wherein the plurality of spots are arranged to define a plurality of pixels on the material, the printing beam remaining incident upon the material as the printing beam is moved between the pixels, the printing beam being moved at a speed which prevents the beam from marking the material between the locations.

6. The method of embodiment 4, further comprising: varying a size of the pixel.

7. The method of embodiment 6, wherein varying the size of the pixels includes varying the number of spots defining the pixel.

8. The method of embodiment 4, wherein the one or more pixels define at least one alphanumeric symbol on the material.

9. The method of embodiment further comprising.
changing the density of the pixels that define the at least one alphanumeric symbol on the material.

10. The method of embodiment 8, wherein the at least one symbol defines a code on the material.

11. The method of embodiment 8, wherein the one or more pixels define a plurality of symbols on the material, the printing beam remaining incident upon the material as the printing beam is moved from one of the symbols to another of the symbols, the printing beam being moved at a speed which prevents the beam from marking the material between the symbols.

12. The method of embodiment 1, further comprising:

forming a visually observable outline on the material, the visually observable outline defining a print zone within which the spot is formed.

13. The method of embodiment 12, wherein the printing system includes a printing beam exit member through which the printing beam exits the printing system, the printing beam exit member being adjustable such that the printing beam can be manually aimed to a particular portion of the material.

14. The method of embodiment 1, wherein the material is a label for affixing to a product.

15. The method of embodiment 1, wherein the laser is an air cooled laser.

16. The method of embodiment 1, wherein the laser is at most a 20 Watt laser.

17. The method of embodiment 1, wherein the laser is at most a 15 Watt laser.

18. The method of embodiment 1, wherein the laser is about a 13 Watt laser.

19. The method of embodiment 1, wherein the printing system weighs less than 25 pounds.

20. The method of embodiment 1, wherein the printing system weighs less than 22 pounds.

21. The method of embodiment 1, wherein the printing system includes a housing having a volume of less than 1200 cubic inches.

22. The method of embodiment 1, wherein the printing system includes a housing having a volume of less than 600 cubic inches.

23. A printing system, comprising:

a laser source for producing a printing beam;
electronics for directing the printing beam to a plurality locations on a material; and
electronics for adjusting a dwell time of the printing beam at the one or more location so as to form a spot at each location.

24. The printing system of embodiment 23, wherein the printing beam is incident upon the material as the printing beam is directed from one of the locations to another of the locations.

25. The printing system of embodiment 23, wherein directing the printing beam to a plurality of locations includes steering the printing beam to a plurality of locations.

26. The printing system of embodiment 23, wherein the locations are arranged such that the spots define one or more pixels on the material.

27. The printing system of embodiment 26, wherein the plurality of spots are arranged to define a plurality of pixels on the material, the printing beam remaining incident upon the material as the printing beam is moved from one of the locations to another location.

28. The printing system of embodiment 23, further
comprising: electronics for varying a size of the pixel.

29. The printing system of embodiment 28, wherein varying the size of the pixels includes varying the number of spots defining the pixel.

30. The printing system of embodiment 26, wherein the one or more pixels define at least one alphanumeric symbol on the material.

31. The printing system of embodiment 26, further comprising:

electronics for changing the density of the pixels that define the at least one alphanumeric symbol on the material.

32. The printing system of embodiment 30, wherein the at least one symbol defines a code on the material.

33. The printing system of embodiment 30, wherein the one or more pixels define a plurality of symbols on the material, the printing beam remaining incident upon the material as the printing beam is moved from one of the symbols to another symbol.

34. The printing system of embodiment 23, further comprising:

electronics for forming a visually observable outline on the material, the visually observable outline defining a print zone within which the spot is formed.

35. The printing system of embodiment 23, wherein the laser is mounted in a housing coupled with a printing beam exit member, the printing beam exit member being movable relative to the housing.

36. The printing system of embodiment 23, wherein the laser is an air cooled laser.

37. The printing system of embodiment 23, wherein the laser is at most a 20 Watt laser.

38. The printing system of embodiment 23, wherein the laser is at most a 15 Watt laser.

39. The printing system of embodiment 23, wherein the printing system weighs less than 25 pounds.

40. The printing system of embodiment 23, wherein the printing system weighs less than 22 pounds.

41. The printing system of embodiment 23, wherein the printing system includes a housing having a volume of less than 1200 cubic inches.

42. The printing system of embodiment 23, wherein the printing system includes a housing having a volume of less than 600 cubic inches.

43. A method for printing on a material, comprising:

providing a printing system having a laser source for producing a printing beam;
directing the printing beam so as to form a code on the material; and
changing the amount of time required to form the code on the product.

44. The method of embodiment 43, wherein directing the printing beam so as to form a code on the material includes directing the printing beam such that the printing beam dwells at a plurality of locations on the material, and changing the amount of time required to form the code on the product includes changing the time that the printing beam dwells at each location.

45. The method of embodiment 43, wherein directing the printing beam so as to form a code on the material includes directing the printing beam so as to form a plurality of pixels on the material, the pixels being arranged so as to define the code, and
changing the amount of time required to form the code on the product includes changing the density of the pixels that define the code.

46. The method of embodiment 43, wherein directing the printing beam so as to form a code on the material includes directing the printing beam so as to form a plurality of pixels on the material, the pixels being arranged so as to define the code, and
changing the amount of time required to form the code on the product includes changing the size of the pixels that define the code.

47. The method of embodiment 46, wherein directing the printing beam so as to form a plurality of pixels on the material includes directing the printing beam so as to form a plurality of spots on the material, the spots arranged so as to define the pixels on the material, and
changing the size of the pixels that define the code includes changing the number of spots that define a pixel.

48. A printing system, comprising:

a laser source for producing a printing beam;
electronics for directing the printing beam so as to form a code on the material; and
electronics for changing the amount of time required to form the code on the product.

49. The system of embodiment 48, wherein directing the printing beam so as to form a code on the material includes directing the printing beam such that the printing beam dwells at a plurality of locations on the material, and changing the amount of time required to form the code on the product includes changing the time that the printing beam dwells at each location.

50. The system of embodiment 48, wherein directing the printing beam so as to form a code on the material includes directing the printing beam so as to form a plurality of pixels on the material, the pixels being arranged so as to define the code, and
changing the amount of time required to form the code on the product includes changing the density of the pixels that define the code.

51. The system of embodiment 48, wherein directing the printing beam so as to form a code on the material includes directing the printing beam so as to form a plurality of pixels on the material, the pixels being arranged so as to define the code, and
changing the amount of time required to form the code on the product includes changing the size of the pixels that define the code.

52. The system of embodiment 51, wherein directing the printing beam so as to form a plurality of pixels on the material includes directing the printing beam so as to form a plurality of spots on the material, the spots arranged so as to define the pixels on the material, and
changing the size of the pixels that define the code includes changing the number of spots that define a pixel.

53. A method for printing, comprising:

providing a printing system for printing a code on a product moving in a direction, the code being constructed from a plurality of pixels in a first data set indicating the positions of the pixels; generating a corrected data set indicating the position that each pixel would occupy if each pixel was moved at the velocity of the product until the pixel was printed; and printing the code according to the corrected data set.

54. The method of embodiment 53, wherein printing the corrected data set includes printing a two dimensional trace of pixels.

55. The method of embodiment 53, wherein printing the corrected includes printing a two dimensional trace of spots.

56. The method of embodiment 53, further comprising:

prioritizing the order in which the pixels are printed such that the pixels are printed in a direction which is opposite to the direction which the product moves.

57. The method of embodiment 53, wherein the printing system includes a laser mounted in a housing, the housing including an optics assembly configured to focus a printing beam produced by the laser onto a product positioned adjacent the housing.

58. The method of embodiment 53, wherein the printing system includes a laser configured to produce a printing beam for printing the code on a product; a housing including a printing beam exit member through which the printing beam exits the housing; and an optics assembly within the housing, the optics assembly configured to focus the printing beam on a product which is adjacent to the housing.

59. The method of embodiment 53, wherein the pixels are constructed from a plurality of spots.

60. The method of embodiment 53, wherein the pixels are constructed from a plurality of spots and the first data set indicates the positions of the spots in the code.

61. The method of embodiment 53, wherein the pixels are constructed from a plurality of spots and the corrected data set indicates the positions that each spot would occupy if each spot were moved along with the product until the spot was printed.

62. A printing system, comprising:

a laser for printing a code on a product moving in a direction, the code being constructed from a plurality of pixels in a first data set indicating the positions of the pixels; electronics for generating a corrected data set indicating the position that each pixel would occupy if each pixel was moved at the velocity of the product until the pixel was printed; and electronics for printing the code according to the corrected data set.

63. The method of embodiment 62, wherein printing the corrected data set includes printing a trace of pixels in two dimensions.

64. The method of embodiment 62, wherein printing the corrected includes printing a trace of spots in two dimensions.

65. The printing system of embodiment 62, further comprising: electronics for prioritizing the order in which the pixels are printed such that the pixels are printed in a direction which is opposite to the direction which the product moves.

66. The printing system of embodiment 65, wherein the laser is mounted in a housing, the housing including an optics assembly configured to focus a printing beam produced by the laser onto a product positioned adjacent the housing.

67. The printing system of embodiment 65, wherein the printing system includes
a laser configured to produce a printing beam for printing the code on a product;
a housing including a printing beam exit member through which the printing beam exits the housing; and
an optics assembly within the housing, the optics assembly configured to focus the printing beam on a product which is adjacent to the housing.

68. The printing system of embodiment 65, wherein the pixels are constructed from a plurality of spots.

69. The printing system of embodiment 65, wherein the pixels are constructed from a plurality of spots and the first data set indicates the positions of the spots in the code.

70. The printing system of embodiment 65, wherein the pixels are constructed from a plurality of spots and the corrected data set indicates the positions that each spot would occupy if each spot was moved along with the product until the spot was printed.

71. A method for printing on a product, comprising:

providing a printing system for printing a code on a product which is adjacent to the printing system and which is moving in a direction relative to the printing system, the code constructed from a plurality of pixels; and
prioritizing the order in which the pixels are printed such that the pixels are printed in a direction which is opposite to the direction which the product moves.

72. The method of embodiment 71, wherein an aperture limits the area within which the laser is able to print and the product moves past the aperture.

73. The method of embodiment 72, wherein the pixels are prioritized such that pixels which would cross in front of the aperture earlier are given a higher priority than pixels which would cross in front of the aperture later if the pixels were already printed on the product as the product moves past the aperture.

74. The method of embodiment 71, wherein the pixels are each constructed from a plurality of spots and prioritizing the order in which the pixels are printed includes prioritizing the order which the spots are printed such that the spots are printed in a direction which is opposite to the direction which the product moves.

75. The method of embodiment 71, wherein the pixels are arranged in a first data set indicating the positions of the pixels, and further comprising:

generating a corrected data set indicating the position that each pixel would occupy if each pixel were moved along with the product until the pixel was printed.

76. The method of embodiment 71, wherein the pixels are arranged in a plurality of columns and prioritizing the order which the pixels are printed includes prioritizing each of the columns.

77. The method of embodiment 71, wherein the printing system includes
a laser mounted in a housing, the housing including an optics assembly configured to focus a printing beam produced by the laser onto a product positioned adjacent to the housing.

78. The method of embodiment 71, wherein the printing system includes
a laser configured to produce a printing beam for printing the code on a product; a housing including a printing beam exit member through which the printing beam exits the housing; and
an optics assembly within the housing, the optics assembly configured to focus the printing beam on a product which is adjacent to the housing.

79. A printing system, comprising:

a laser for printing a code on a product which is adjacent to the printing system and moving in a direction relative to the printing system, the code constructed from a plurality of pixels; and
electronics for prioritizing the order in which the pixels are printed such that the pixels are printed in a direction which is opposite to the direction which the product moves.

80. The printing system of embodiment 79, wherein an aperture limits the area of the product on which the laser is able to print as the product moves past the printing system.

81. The printing system of embodiment 80, wherein the pixels are prioritized such that pixels which would cross in front of the aperture earlier are given a higher priority than pixels which would cross in front of the aperture later if the pixels were present on the product before being printed by the printing system.

82. The printing system of embodiment 79, wherein the pixels are each constructed from a plurality of spots and prioritizing the order in which the pixels are printed includes prioritizing the order which the spots are printed such that the spots are printed in a direction which is opposite to the direction which the product moves.

83. The printing system of embodiment 79, wherein the pixels are arranged in a first data set indicating the positions of the pixels, and further comprising:

generating a corrected data set indicating the position that each pixel would occupy if each pixel were moved along with the product until the pixel was printed.

84. The printing system of embodiment 79, wherein the pixels are arranged in a plurality of columns and prioritizing the order which the pixels are printed includes prioritizing each of the columns.

85. A method for printing, comprising:

providing a printing system for printing an alphanumeric code on a product moving in a direction, the code being constructed from a plurality of pixels; and
printing pixels on the product in a two dimensional trace so as to form the code on the product.

86. A method of printing, comprising:

providing a printing system for printing an alphanumeric code on a product moving in a direction, the code being constructed from a plurality of pixels; and
changing the density of the pixels that construct the code.

87. The method of embodiment 86, wherein the density of the pixels is changed in accordance with the amount of time available to print the code on the product.

88. A printing system, comprising:

a laser for printing an alphanumeric code on a product that is adjacent to the printing system and moving in a direction relative to the printing system, the code constructed from a plurality of pixels; and
electronics for printing pixels on the product so as to form the code on the product, the pixels being printed in a two dimensional trace.

89. A printing system, comprising:

a laser configured to produce a printing beam for printing a code on a product, the laser being at most a 25 Watt laser;
a housing including a printing beam exit member through which the printing beam exits the housing; and
an optics assembly within the housing, the optics assembly focussing the printing beam on a product which is adjacent to the housing.

90. The printing system of embodiment 89, wherein the printing beam exit member is movable relative to the housing;

91. The printing system of embodiment 89, wherein a bearing couples the printing beam exit member to the housing.

92. The printing system of embodiment 91, wherein the bearing has an axis of rotation and the printing beam passes through the bearing along the axis of rotation.

93. The printing system of embodiment 89, further comprising:

a negative lens for expanding the printing beam and a positive lens for focussing the printing beam.

94. The printing system of embodiment 89, further comprising:

a collimating lens positioned between the negative lens and the positive lens.

95. The printing system of embodiment 89, further comprising: electronics for correcting the non-linearity of one or more lenses through which the printing beam passes.

96. The printing system of embodiment 89, further comprising:

a print zone light source for producing a print zone beam for defining a print zone within which the code is printed, the print zone beam exiting the housing through the printing beam exit member.

97. The printing system of embodiment 89, further comprising:

one or more mirrors for reflecting the printing beam in a desired direction.

98. The printing system of embodiment 97, wherein at least one of the one or more mirrors are connected to a motor configured to move the mirrors so as to control the direction that the printing beam is reflected.

99. The printing system of embodiment 98, further comprising:

electronics for controlling the motors so as to steer the printing beam from one location to another.

100. The printing system of embodiment 89, wherein the laser is an air cooled laser.

101. The printing system of embodiment 89, wherein the laser is at most a 20 Watt laser.

102. The printing system of embodiment 89, wherein the laser is at most a 15 Watt laser.

103. The printing system of embodiment 89, wherein the printing system weighs less than 25 pounds.

104. The printing system of embodiment 89, wherein the printing system weighs less than 22 pounds.

105. The printing system of embodiment 89, wherein the printing system includes a housing having a volume of less than 1200 cubic inches.

106. The printing system of embodiment 89, wherein the printing system includes a housing having a volume of less than 600 cubic inches.

## Claims

1. A method of printing, comprising:

   providing a printing system for printing an alphanumeric code on a product moving in a direction relative to the printing system, the code being constructed from a plurality of pixels; and
   changing a density of the pixels that construct the code in accordance with a velocity of the product moving in the direction.

2. The method of claim 1, wherein the density of the pixels is decreased in accordance with a reduced amount of time available to print the code on the product.

3. The method of claim 1 or claim 2 wherein changing the density of the pixels includes changing a distance between the pixels to increase or decrease the size of the code.

4. The method of claim 3 wherein the distance between the pixels is reduced up to a point that a perimeter of one pixel abuts the perimeter of another pixel.

5. The method of claim 1 wherein symbols of alphanumeric code are formed in a predetermined array of possible pixels by selecting certain pixels of the possible pixels to become a pixel of a symbol while not selecting others of the pixels.

6. The method of claim 5 wherein changing the density of the pixels that construct the code results in reducing a size of the array.

7. The method of claim 5 or claim 6 wherein the array has rows and columns.

8. The method of any one of claims 5 to 7 further comprising:

   directing a printing beam as to create pixels on the product in a pattern selected from among the possible pixels in the array.

9. The method of any one of the claims 5 to 8 further comprising:

   reducing a size of the array to meet a predetermined printing time requirement.

10. The method of claim 9 wherein reducing the size of the array includes reducing a number of pixels that must be printed to print the alphanumeric code.

11. The method of any one of the preceding claims wherein the product is a product to be sold retail or a packaging of a retail products or a product sold to other businesses, preferably wherein the product includes one or more selected from the group consisting of pharmaceuticals, pharmaceutical packaging, food packaging, cosmetics, food, dairy products, computer components, automotive components, medical devices, detergents and beverages.

12. The method of one of the preceding claims wherein the printing system for printing an alphanumeric code on a product includes a laser for producing a printing beam, wherein the printing beam passes through an optics assembly to be incident on the product.

13. The method of one of the preceding claims wherein the product moves in a production line.

14. A printing system, comprising:

   a laser for printing a code on a product moving in a direction relative to the printing system, the code being constructed from a plurality of pixels in a first data set indicating the positions of the pixels;
   electronics for changing the density of the plurality of pixels that construct the code in accordance with an amount of time available to print the code on the product determined by a speed with which the product is moving; and
   electronics for printing the code according to the changed density of the plurality of pixels.

15. The printing system of claim 14, wherein the density of the pixels is decreased in accordance with a reduced amount of time available to print the code on the product.

Figure 1A

Figure 1B

Figure 2

Figure 3A

Figure 3B

Figure 3C

Figure 4A

Figure 4B

Figure 4c

EP 2 988 246 A1

Figure 4D

Figure 4E

Figure 5B

Figure 5D

Figure 5A

Figure 5C

Figure 6D

Figure 6C

Figure 6A

Figure 6B

Figure 7A

Figure 7B

EP 2 988 246 A1

Figure 9C

Figure 8A

Figure 8B

32

EP 2 988 246 A1

88

$P_{5,0}$ — O — 5 = n
$P_{4,0}$ — O — 4 = n
$P_{3,0}$ — O — 3 = n
$P_{2,0}$ — O — 2 = n
$P_{1,0}$ — O — 1 = n

image
to be created

→

Figure 9A

88

$P_{6,0}$ — O ——— O $P_5$
$P_{7,0}$ — O ——— O $P_4$
$P_{2,0}$ — O —— O $P_3$
$P_{2,0}$ — O—O $P_2$
$P_{1,0}$ — O $P_1$

Figure 9B

88

O $Q_5$
O $Q_4$
$Q_3$
$C_{i,2}$
$Q_1$

Figure 9C

88

O
O
O
O
O

Figure 9D

Figure 10A

Figure 10B

Figure 10C

Figure 10D

Figure 10E

Figure 11A

IMAGE

$d_4$

Figure 11B

EP 2 988 246 A1

Europäisches
Patentamt
European
Patent Office
Office européen
des brevets

**EUROPEAN SEARCH REPORT**

Application Number

EP 15 18 6161

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 990 444 A (COSTIN DARRYL J) 23 November 1999 (1999-11-23) * column 1, line 65 - column 3, line 39 * * column 6, line 28 - column 7, line 14 * * column 12; table 5 * * column 24, line 47 - line 57 * * column 34, line 13 - line 34 * ----- | 1-15 | INV. G06K1/12 |
| A | WO 97/47397 A1 (INFOSIGHT CORP [US]) 18 December 1997 (1997-12-18) * page 4, line 10 - page 5, line 17 * * figure 3 * ----- | 1,14 | |
| A | US 4 720 618 A (STAMER MICHAEL E [US] ET AL) 19 January 1988 (1988-01-19) * column 1, line 8 - line 14 * * column 2, line 50 - column 3, line 19 * * figure 1 * ----- | 1,14 | |

| | | | TECHNICAL FIELDS SEARCHED (IPC) |
|---|---|---|---|
| | | | G06K B41M |

The present search report has been drawn up for all claims

| Place of search | Date of completion of the search | Examiner |
|---|---|---|
| The Hague | 5 January 2016 | Goossens, Ton |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 18 6161

This annex lists the patent family members relating to the patent documents cited in the above-mentioned European search report.
The members are as contained in the European Patent Office EDP file on
The European Patent Office is in no way liable for these particulars which are merely given for the purpose of information.

05-01-2016

| Patent document cited in search report | | Publication date | Patent family member(s) | | Publication date |
|---|---|---|---|---|---|
| US 5990444 | A | 23-11-1999 | AT | 454949 T | 15-01-2010 |
| | | | ES | 2356336 T3 | 07-04-2011 |
| | | | US | 5990444 A | 23-11-1999 |
| WO 9747397 | A1 | 18-12-1997 | AT | 214305 T | 15-03-2002 |
| | | | DE | 69711017 D1 | 18-04-2002 |
| | | | DE | 69711017 T2 | 29-08-2002 |
| | | | EP | 0854761 A1 | 29-07-1998 |
| | | | ES | 2171965 T3 | 16-09-2002 |
| | | | US | 5855969 A | 05-01-1999 |
| | | | WO | 9747397 A1 | 18-12-1997 |
| US 4720618 | A | 19-01-1988 | AT | 112873 T | 15-10-1994 |
| | | | CA | 1292286 C | 19-11-1991 |
| | | | DE | 3750649 D1 | 17-11-1994 |
| | | | EP | 0256706 A2 | 24-02-1988 |
| | | | JP | 2509236 B2 | 19-06-1996 |
| | | | JP | S6342191 A | 23-02-1988 |
| | | | US | 4720618 A | 19-01-1988 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 19751800 P
- US 704653 A
- US 09705007 B
- US 09705206 B